# EUROPEAN PATENT SPECIFICATION

(11) **EP 1 197 588 B1**
(45) Date of publication and mention of the grant of the patent: **28.02.2007**
(21) Application number: 01124570.1
(22) Date of filing: 15.10.2001
(51) Int. Cl.: D01F 1/10, D01F 6/62, D01F 6/92, C08K 3/20, C08G 63/00, C08L 67/02

(54) **The kinds of glycols starting material containing dispersed superfine ceramic powders coagulates capable of forming polyester molded body having high mechanical strength and transparency**
Glykole Ausgangsmaterialien enthalten Feinkeramikpulver für geformten Gegenstand aus Polyester mit hoher mechanischen Festigkeit und Transparenz
Réactifs de type glycol contenant des proudres céramiques superfines coagulées apte à donner des articles moulés en polyestere ayant une haute resistance mecanique et une haute transparence

(30) Priority: 16.10.2000 JP 2000315108; 08.09.2001 EP 01121506
(43) Date of publication of application: 17.04.2002
(73) Proprietor: Degussa GmbH, 40474 Düsseldorf (DE); Nippon Aerosil Co., Ltd., Shinjuku-ku, Tokyo 163-09 (JP)
(72) Inventor: Ochiai, Mitsuru, Hasuda-City, 349-0113 (JP); Iida, Keiichi, Kawasaki-City, 212-0025 (JP); Ishibashi, Naruyasu, Yokkaichi-City, 510-0074 (JP)
(74) Representative: Weber, Wolfgang

(56) References cited:
- DE-A- 19 606 266
- PATENT ABSTRACTS OF JAPAN vol. 014, no. 423 (C-0757), 12 September 1990 (1990-09-12) -& JP 02 160862 A (DIAFOIL CO LTD;OTHERS: 01), 20 June 1990 (1990-06-20)
- PATENT ABSTRACTS OF JAPAN vol. 014, no. 423 (C-0757), 12 September 1990 (1990-09-12) -& JP 02 160921 A (MITSUBISHI RAYON CO LTD), 20 June 1990 (1990-06-20)

## Description

### BACKGROUND OF THE INVENTION

### 1. Field of the Invention

The present invention relates to an the kind of glycol starting material containing dispersed superfine ceramic powder aggregates that enables polyester molded body to be thin and to have fine fiber size, as well as its transparency to be improved, when the material is used for manufacturing the polyester molded body applicable for films and threads.

### 2. Description of the Related Art

Conventional polyesters have been manufactured by the steps comprising: esterifying terephthalic acid with ethylene glycol at 260°C in a reaction vessel; forming a polyester polymer by allowing the polymerization reaction to proceed; and quenching the polyester polymer by injecting the reaction product onto the surface of a quenching rotary drum for forming a film, or allowing the polyester polymer to spout out of fine perforation holes on a die having a number of the perforation holes on its surface and rotating at a high speed like a top for spinning fibers.

It is known in the art that the kind of glycol starting material used for manufacturing the polyester molded body contains 1 to 20% by mass of a superfine ceramic powder comprising silicon oxide (denoted as SiO₂ hereinafter), aluminum oxide (denoted as Al₂O₃ hereinafter) and titanium oxide (denoted as TiO₂ hereinafter) relative to the content of the kind of glycol, in order to improve abrasion resistance and compatibility to dyes, and for preventing blocking.

The superfine ceramic powder to be used for dispersing into the kind of glycol starting material is usually manufactured by a gas-phase reaction of SiCl₄, AlCl₃ or TiCl₄ with hydrogen and oxygen in a combustion burner flame. The superfine ceramic powder obtained has a very fine mean grain size of 40 nm or less, as determined by averaging the measured largest longitudinal diameters of arbitrary plural grains observed in a field of view of the texture of the powder under a transmission type electron microscope. Since the powder comprises superfine grains, they inevitably aggregate to one another to form superfine ceramic powder aggregates generally with a mean diameter of 1 to 30 µm, even when the powder is added in an the kind of glycol starting material by grinding the powder in a ball mill.

The polyester molded body has been made to be light weight and small size in compliance with the improvement and development of film casting and thread spinning technologies combined with diversity of needs, and more improvements in thinning the film or making the diameter of the thread fine as well as transparency of the films and threads are urgently desired in applying the technologies. However, thin films and fine threads have not been realized in the conventional polyester molded bodies due to insufficient mechanical strength, in addition to insufficient transparency of them.

### SUMMARY OF THE INVENTION

Accordingly, the object of the present invention is to provide a method for enabling a polyester molded body having a high mechanical strength and transparency to be manufactured using an the kind of glycol starting material containing dispersed superfine ceramic powder aggregates.

The present invention for solving the foregoing problems provides an the kind of glycol starting material for manufacturing a polyester molded body containing 1 to 20% by mass of dispersed superfine ceramic powder aggregates relative to the total content of the kind of glycol for enabling polyester molded bodies having a high mechanical strength and transparency to be manufactured, wherein the superfine ceramic powder aggregates dispersed in the the kind of glycol starting material has a mean grain size of 0.05 to 0.5 µm as measured with a laser diffraction particle size distribution analyzer, and wherein the peak indicated in a particle size distribution curve of the superfine ceramic powder aggregates obtained based on the results of the measurement satisfies the relation of w/h ≤ 0.7, wherein h is the peak height and w is the peak width at one half of the peak height (a half-width).

### DESCRIPTION OF THE PREFERRED EMBODIMENTS

The inventors of the present invention have noticed an the kind of glycol starting material containing dispersed superfine ceramic powder aggregates used for manufacturing polyester molded bodies, in order to improve the mechanical strength and transparency of the polyester molded body from the view point of the foregoing problems, and obtained the following experimental results.
(a) The dispersed superfine ceramic powder aggregates contained in an the kind of glycol starting material has a mean grain size of 1 to 30 µm as measured with a laser diffraction grain size distribution analyzer. The particle size distribution curve of the superfine ceramic powder aggregates obtained based on the results of measurements showed a pattern. The peak shown in the pattern is exhibited by a relation of w/h = 1 to 1.5, wherein h is the peak height and w is the peak width at one-half of the peak height (a half width). The relation shows that the superfine ceramic powder aggregates is relatively cause, and the grain size is irregular among the grains in the powder, or being poor in uniformity of the grain size. Since the fracture initiation points comprise the superfine ceramic powder aggregates having a relatively course particle size in the polyester molded body manufactured using the kind of glycol starting material containing dispersed superfine ceramic powder aggregates having a relatively coarse and irregular grain size distribution, the polyester cannot be endowed with a high mechanical strength besides causing a decrease in transparency.
(b) The kind of glycol starting materials containing conventional dispersed superfine ceramic powder aggregates have been prepared by mixing, or by grinding with mixing, the superfine ceramic powder aggregates using a conventional mixer, ball-mill or rod-mill in the kind of glycol. However, when the kind of glycol starting material containing the conventional dispersed superfine ceramic powder aggregates is treated with an ultrasonic homogenizer, or with a jet-mill by which the aggregates in a ultra-high jet stream collides to one another for a given period of time, the superfine ceramic powder aggregates in the kind of glycol are quite rapidly pulverized with a high degree of pulverization. By adjusting the treatment time described above, the superfine ceramic powder aggregates dispersed in the kind of glycol is pulverized to a mean grain size of 0.05 to 0.5 µm as measured with a laser grain size distribution analyzer. In addition, the particle size distribution curve of the superfine ceramic powder aggregates obtained based on the results of the measurement, or the peak in the particle size distribution curve, satisfies the relation of w/h ≤ 0.7, wherein h is the peak height and w is the peak width at one half of the peak height (a half-width). As a result, the superfine ceramic powder aggregates with good uniformity of the grain size, or having a homogeneous grain size distribution as a whole, are uniformly dispersed in the entire polyester molded body manufactured using the kind of glycol starting material in which the superfine ceramic powder aggregates are dispersed. Therefore, the superfine ceramic powder aggregates do not function as the fracture initiation points to endow the polyester molded body with high mechanical strength, besides improving transparency of the polyester molded body.

The mean grain size of the superfine ceramic powder aggregates in the kind of glycol starting material according to the present invention was adjusted to 0.05 to 0.5 µm because, when the mean grain size is less than 0.05 µm, blocking preventive effect in the polyester molded body rapidly decreases, while the mechanical strength of the polyester molded body rapidly decreases since coarse grains with a mean grain size of exceeding 0.5 µm function as the fracture initiation points. Desirably, the mean grain size is within a range of 0.1 to 0.2 µm.

The peak configuration of the particle size distribution curve of the superfine ceramic powder aggregates was made to satisfy the relation of w/h ≤ 0.7 because, when the ratio is larger than 0.7, the proportion of the superfine ceramic powder aggregates having large differences in their grain size to one another becomes relatively so large that transparency becomes poor in the polyester molded body in which such superfine ceramic powder aggregates having large grain size differences among them are dispersed.

In addition, the content of the superfine ceramic powder aggregates was adjusted within a range of 1 to 20% by mass because, when the content is less than 1% by mass, the polyester molded body cannot be endowed with desirable abrasion resitance, compatibility to dyes and blocking preventive effect while, when the content exceeds 20% by mass, the mechanical strength of the polyester molded body rapidly decreases.

### (Example)

The kind of glycol starting material according to the present invention will be desscribed hereinafter with reference to the example.

Superfine SiO₂ powder, Al₂O₃ powder and TiO₂ powder were prepared by a gas phase hydrolysis reaction of SiCl₄, AlCl₃ and TiCl₄ as stating materials with oxygen and hydrogen using a combustion burner. Textures of these superfine ceramic powders were observed under a scanning type electron microscope, and the maximum longitudinal length of each arbitrarily selected 50 grains in a field of view was measured. Mean grain sizes were determined from these measured values as shown in Table 2. These superfine ceramic powder aggregates were added in the kind of glycol with each proportion shown in Table 2 with stirring using a conventional mixer, and the kind of glycol starting materials No. 1 to 15 containing the conventional superfine ceramic powder aggregates (referred as the conventional kind of glycol starting materials hereinafter) shown in Table 2 were manufactured.

Each of the conventional kind of glycol starting materials No. 1 to 15 were treated with a jet mill for a prescribed time using the conventional kind of glycol starting materials as jet sources, and the aggregates in the conventional kind of glycol starting material were allowed to collide to one another. The treatment conditions were collision radius of the jet stream of 0.1 mm, and jet stream speed of 600 m/sec. The the kind of glycol starting materials containing the dispersed superfine ceramic powder aggregates according to the present invention (referred as the the kind of glycol stating materials according to the present invention) No. 1 to 15 were manufactured by further pulverizing the superfine ceramic powder aggregates in the conventional kind of glycol starting material.

The grain size distribution of the superfine ceramic powder aggregates in the kind of glycol starting materials No. 1 to 15 according to the present invention, and in the conventional kind of glycol starting materials No. 1 to 15, were measured using a laser diffraction grain size distribution analyzer. The mean grain size as well as the grain size distribution curve were obtained based on the results of these measurements, and w/h values of the peaks shown in the grain size distribution curves were calculated (wherein h is a peak height and w is a peak width (a half-width)). These results are shown in Tables 1 and 2.

For the purposes of investigating the effects of the the kind of glycol starting materials No. 1 to 15 according to the present invention, and of the conventional kind of glycol starting materials No. 1 to 15, on the mechanical strength and transparency of polyester molded bodies, these kind of glycol starting materials were added in the esterification reaction vessel in a proportion of 52 parts by mass relative to 100 parts by mass of terephthalic acid. The esterification reactions were carried out at 260°C, and the esters obtained were further polymerized to form polyesters. The polymer solution was injected between two water-cool type drums with a diameter of 150 mm, which rotate toward the inside to one another and are horizontally arranged in parallel to one another, from the upward, and was extruded into a film with a thickness of 1 mm. Polyester molded bodies were manufactured by subsequently heat-treating these films at 210°C for three seconds.

Transparency and mechanical strength of each polyester molded body obtained were evaluated. The films were subjected to a pre-treatment in an atmosphere at a temperature of 23°C and a humidity of 75% for 1.5 hours following JS K6758, and transparency was evaluated by measuring haze values (%) according to JIS K6714 and JIS K6718.

Test pieces of 50 mm in width and 5 mm in length were cut from the films, and fracture strenth of each film was measured for evaluating the mechanical strength. The results of these measurements are shown in Tables 1 and 2.

**TABLE 1**

| CLASSIFICATION | | SUPERFINE CERAMIC POWDER | | SUPERFINE CERAMIC POWDER AGGREGATES | | | POLYESTER MOLDED BODY | |
|---|---|---|---|---|---|---|---|---|
| | | MATERIAL | MEAN GRAIN SIZE (nm) | CONTENT (% BY MASS) | MEAN GRAIN SIZE ( µM) | w/h OF THE PEAK | HAZE (%) | FRACTURE STRENGTH (Pa) |
| The kind of GLYCOL STARTING MATERIAL ACCORDING TO THE PRESENT INVENTION | 1 | SiO₂ | 40 | 1 | 0.140 | 0.48 | 0.8 | 50.2 |
| | 2 | SiO₂ | 7 | 5 | 0.098 | 0.51 | 1.0 | 53.6 |
| | 3 | SiO₂ | 12 | 10 | 0.118 | 0.65 | 1.0 | 57.4 |
| | 4 | SiO₂ | 30 | 15 | 0.107 | 0.46 | 1.2 | 55.1 |
| | 5 | SiO₂ | 7 | 20 | 0.110 | 0.66 | 1.3 | 60.3 |
| | 6 | SiO₂ | 30 | 20 | 0.400 | 0.70 | 1.4 | 53.4 |
| | 7 | SiO₂ | 40 | 20 | 0.500 | 0.65 | 1.5 | 52.6 |
| | 8 | SiO₂ | 12 | 10 | 0.102 | 0.45 | 1.1 | 58.6 |
| | 9 | SiO₂ | 12 | 10 | 0.105 | 0.47 | 1.1 | 59.1 |
| | 10 | SiO₂ | 30 | 20 | 0.400 | 0.58 | 1.4 | 54.3 |
| | 11 | SiO₂ | 40 | 20 | 0.500 | 0.61 | 1.5 | 51.9 |
| | 12 | Al₂O₃ | 13 | 1 | 0.121 | 0.54 | 0.9 | 49.6 |
| | 13 | Al₂O₃ | 13 | 5 | 0.119 | 0.53 | 1.3 | 52.1 |
| | 14 | Al₂O₃ | 13 | 10 | 0.122 | 0.63 | 1.2 | 55.8 |
| | 15 | Al₂O₃ | 13 | 15 | 0.130 | 0.65 | 1.2 | 57.6 |
| | 16 | Al₂O₃ | 13 | 20 | 0.128 | 0.58 | 1.1 | 58.9 |
| | 17 | Al₂O₃ | 13 | 20 | 0.400 | 0.60 | 1.3 | 56.2 |
| | 18 | Al₂O₃ | 13 | 20 | 0.500 | 0.57 | 1.4 | 55.3 |

**TABLE 2**

| CLASSIFICATION | | SUPERFINE CERAMIC POWDER | | SUPERFINE CERAMIC POWDER AGGREGATES | | | POLYESTER MOLDED BODY | |
|---|---|---|---|---|---|---|---|---|
| | | MATERIAL | MEAN GRAIN SIZE (nm) | CONTENT (% BY MASS) | MEAN GRAIN SIZE (µM) | w/h OF THE PEAK | HAZE (%) | FRACTURE STRENGTH (Pa) |
| The kind of GLYCOL STARTING MATERIAL ACCORDING TO THE PRESENT INVENTION | 19 | Al₂O₃ | 13 | 10 | 0.125 | 0.57 | 1.2 | 56.7 |
| | 20 | Al₂O₃ | 13 | 10 | 0.125 | 0.57 | 1.2 | 56.7 |
| | 21 | Al₂O₃ | 13 | 20 | 0.400 | 0.56 | 1.4 | 55.1 |
| | 22 | Al₂O₃ | 13 | 20 | 0.500 | 0.57 | 1.9 | 54.2 |
| | 23 | TiO₂ | 39 | 1 | 0.125 | 0.48 | 0.9 | 43.0 |
| | 24 | TiO₂ | 21 | 5 | 0.142 | 0.32 | 1.0 | 46.2 |
| | 25 | TiO₂ | 13 | 10 | 0.134 | 0.60 | 1.2 | 48.4 |
| | 26 | TiO₂ | 21 | 15 | 0.144 | 0.65 | 1.2 | 50.1 |
| | 27 | TiO₂ | 13 | 20 | 0.139 | 0.40 | 1.4 | 52.3 |
| | 28 | TiO₂ | 21 | 20 | 0.400 | 0.67 | 1.3 | 52.0 |
| | 29 | TiO₂ | 39 | 20 | 0.500 | 0.69 | 1.4 | 51.1 |
| | 30 | TiO₂ | 21 | 20 | 0.130 | 0.39 | 1.1 | 53.3 |
| | 31 | TiO₂ | 13 | 20 | 0.145 | 0.41 | 1.0 | 52.9 |
| | 32 | TiO₂ | 39 | 20 | 0.400 | 0.62 | 1.3 | 50.1 |
| | 33 | TiO₂ | 39 | 20 | 0.500 | 0.65 | 1.5 | 51.8 |
| | 34 | SiO₂:50/Al₂O₃:50 | 30 | 10 | 0.124 | 0.43 | 1.2 | 56.2 |
| | 35 | SiO₂:50/Al₂O₃:50 | 25 | 10 | 0.130 | 0.51 | 1.4 | 52.1 |
| | 36 | SiO₂:50/Al₂O₃:50 | 30 | 20 | 0.500 | 0.60 | 1.5 | 53.2 |
| | 37 | SiO₂:50/Al₂O₃:50 | 25 | 20 | 0.500 | 0.62 | 1.4 | 52.9 |

**TABLE 3**

| CLASSIFICATION | | SUPERFINE CERAMIC POWDER | | SUPERFINE CERAMIC POWDER AGGREGATES | | | POLYESTER MOLDED BODY | |
|---|---|---|---|---|---|---|---|---|
| | | MATERIAL | MEAN GRAIN SIZE (nm) | CONTENT (% BY MASS) | MEAN GRAIN SIZE (µM) | w/h OF THE PEAK | HAZE (%) | FRACTURE STRENGTH (Pa) |
| CONVENTIONAL kind of GLYCOL STARTING MATERIAL | 1 | SiO₂ | 40 | 1 | 1.56 | 1.00 | 1.9 | 36.8 |
| | 2 | SiO₂ | 7 | 5 | 1.50 | 1.10 | 2.2 | 36.1 |
| | 3 | SiO₂ | 12 | 10 | 20.4 | 1.48 | 2.3 | 35.2 |
| | 4 | SiO₂ | 30 | 15 | 28.8 | 1.50 | 2.8 | 34.5 |
| | 5 | SiO₂ | 7 | 20 | 30.8 | 1.50 | 2.8 | 33.6 |
| | 6 | SiO₂ | 30 | 20 | 29.5 | 1.53 | 2.9 | 32.1 |
| | 7 | SiO₂ | 40 | 20 | 31.6 | 1.64 | 2.9 | 34.4 |
| | 8 | SiO₂ | 12 | 10 | 18.6 | 1.28 | 2.8 | 33.5 |
| | 9 | SiO₂ | 12 | 10 | 17.5 | 1.19 | 2.8 | 36.2 |
| | 10 | SiO₂ | 30 | 20 | 29.2 | 1.51 | 2.9 | 35.1 |
| | 11 | SiO₂ | 40 | 20 | 28.6 | 1.63 | 2.9 | 34.7 |
| | 12 | Al₂O₃ | 13 | 1 | 1.80 | 1.01 | 1.9 | 38.2 |
| | 13 | Al₂O₃ | 13 | 5 | 10.6 | 1.15 | 2.0 | 37.0 |
| | 14 | Al₂O₃ | 13 | 10 | 29.2 | 1.44 | 1.9 | 36.2 |
| | 15 | Al₂O₃ | 13 | 15 | 30.5 | 1.60 | 2.5 | 35.3 |
| | 16 | Al₂O₃ | 13 | 20 | 31.0 | 1.62 | 2.5 | 34.3 |
| | 17 | Al₂O₃ | 13 | 20 | 31.0 | 1.62 | 2.5 | 34.3 |
| | 18 | Al₂O₃ | 13 | 20 | 31.0 | 1.62 | 2.5 | 34.3 |

**TABLE 4**

| CLASSIFICATION | | SUPERFINE CERAMIC POWDER | | SUPERFINE CERAMIC POWDER AGGREGATES | | | POLYESTER MOLDED BODY | |
|---|---|---|---|---|---|---|---|---|
| | | MATERIAL | MEAN GRAIN SIZE (nm) | CONTENT (% BY MASS) | MEAN GRAIN SIZE (µM) | w/h OF THE PEAK | HAZE (%) | FRACTURE STRENGTH (Pa) |
| CONVENTIONAL kind of GLYCOL STARTING MATERIAL | 19 | Al₂O₃ | 13 | 10 | 1.56 | 1.00 | 1.9 | 36.8 |
| | 20 | Al₂O₃ | 13 | 10 | 1.50 | 1.10 | 2.2 | 36.1 |
| | 21 | Al₂O₃ | 13 | 20 | 20.4 | 1.48 | 2.3 | 35.2 |
| | 22 | Al₂O₃ | 13 | 20 | 28.8 | 1.50 | 2.8 | 34.5 |
| | 23 | TiO₂ | 39 | 1 | 1.20 | 1.02 | 1.9 | 40.1 |
| | 24 | TiO₂ | 21 | 5 | 10.5 | 1.22 | 2.3 | 39.2 |
| | 25 | TiO₂ | 13 | 10 | 25.9 | 1.40 | 2.5 | 37.7 |
| | 26 | TiO₂ | 21 | 15 | 25.8 | 1.40 | 2.3 | 37.0 |
| | 27 | TiO₂ | 13 | 20 | 28.6 | 1.52 | 2.8 | 36.4 |
| | 28 | TiO₂ | 21 | 20 | 25.2 | 1.61 | 2.5 | 30.7 |
| | 29 | TiO₂ | 39 | 20 | 27.4 | 1.52 | 2.4 | 34.5 |
| | 30 | TiO₂ | 21 | 20 | 26.3 | 1.64 | 2.5 | 36.6 |
| | 31 | TiO₂ | 13 | 20 | 25.4 | 1.63 | 2.7 | 34.9 |
| | 32 | TiO₂ | 39 | 20 | 29.6 | 1.55 | 2.8 | 38.7 |
| | 33 | TiO₂ | 39 | 20 | 30.3 | 1.51 | 2.9 | 35.6 |
| | 34 | SiO₂:50/Al₂O₃:50 | 30 | 10 | 27.2 | 1.58 | 2.8 | 38.2 |
| | 35 | SiO₂:50/Al₂O₃:50 | 25 | 10 | 24.3 | 1.61 | 2.8 | 37.9 |
| | 36 | SiO₂:50/Al₂O₃:50 | 30 | 10 | 26.5 | 1.55 | 2.6 | 37.2 |
| | 37 | SiO₂:50/Al₂O₃:50 | 25 | 10 | 23.1 | 1.48 | 2.7 | 36.5 |

Table 1 shows that the superfine ceramic powder aggregates dispersed in all the kind of glycol starting materials No. 1 to 15 according to the present invention have a mean grain size of 0.05 to 0.5 µm and the w/h values of 0.7 or less at the peak. The aggregates are finer and have better uniformity of the grain size distribution as compared with the superfine ceramic powder aggregates having a mean grain size of 1 to 30 µm and w/h values of 1 to 1.5 in the conventional kind of glycol starting material. Accordingly, the polyester molded bodies manufactured by using the kind of glycol starting materials No. 1 to 15 according to the present invention clearly have a relatively higher mechanical strength and better transparency as compared with the polyester molded bodies manufactured by using the conventional kind of glycol starting materials No. 1 to 15.

As hitherto described, the kind of glycol starting materials containing the superfine ceramic powder aggregates according to the present invention enable the polyester molded bodies having a high mechanical strength and transparency to be manufactured, making it possible to make the polyester molded body thinner and finer, and to improve transparency of the molded body. And the kinds of glycols comprised of propylene glycols butyleneglycol and ethylene glycols and other glycols (the best component is 1,3-propyleneglycol, 1,4-butylene glycols and 1,2-ethyleneglycol)

## Claims

1. An the kind of glycol starting material for manufacturing a polyester molded body containing 1 to 20% by mass of dispersed superfine ceramic powder aggregates relative to the total content of the kind of glycol for enabling polyester molded bodies having a high mechanical strength and transparency to be manufactured, wherein the superfine ceramic powder aggregates dispersed in the the kind of glycol starting material has a mean grain size of 0.05 to 0.5 µm as measured with a laser diffraction grain size distribution analyzer, and wherein the peak indicated in a particle size distribution curve of the superfine ceramic powder aggregates obtained based on the results of the measurement satisfies the relation of w/h ≤ 0.7, wherein h is the peak height and w is the peak width at one half of the peak height (a half-width).

## Patentansprüche

1. Glykoles Ausgangsmaterial zur Herstellung eines geformten Gegenstands aus Polyester, der bezogen auf den Gesamtgehalt des Glykolmaterials 1 bis 20 Massen% dispergierte superfeine Keramikpulveraggregate enthält, um die Herstellung von geformten Gegenständen aus Polyester mit einer hohen mechanischen Festigkeit und Transparenz zu ermöglichen, wobei die in dem glykolen Ausgangsmaterial dispergierten superfeinen Keramikpulveraggregate eine mittlere Korngröße von 0,05 bis 0,5 µm aufweisen, gemessen mit einem Laserbeugungs-Korngrößenverteilungsanalysegerät, und wobei der Peak, der sich in einer Teilchengrößenverteilungskurve der erhaltenen superfeinen Keramikpulveraggregate zeigt, die auf den Ergebnissen der Messung basiert, die Beziehung w/h ≤ 0,7 erfüllt, wobei h die Peakhöhe und w die Peakbreite bei der Hälfte der Peakhöhe (eine Halbwertsbreite) ist.

## Revendications

1. Type de substance de départ glycol pour la fabrication d'un corps moulé de polyester contenant de 1 à 20 % en masse d'agrégats de poudre céramique superfine dispersés par rapport à la teneur totale en le type de glycol, pour permettre la fabrication de corps moulés de polyester présentant une résistance mécanique et une transparence élevées, où les agrégats de poudre céramique superfine dispersés dans le type de substance de départ glycol présentent une granulométrie moyenne de 0,05 à 0,5 µm, telle que mesurée avec un analyseur de distribution granulométrique à diffraction laser, et où le pic indiqué dans une courbe de distribution granulométrique des agrégats de poudre céramique superfine, obtenue sur la base des résultats de la mesure, satisfait à la relation w/h ≤ 0,7, dans laquelle h est la hauteur du pic et w est la largeur du pic à la moitié de la hauteur du pic (une demi-largeur).
